(19) Europäisches Patentamt
European Patent Office
Office européen des brevets

(11) **EP 4 036 348 A1**

(12) **EUROPEAN PATENT APPLICATION**
published in accordance with Art. 153(4) EPC

(43) Date of publication:
**03.08.2022  Bulletin 2022/31**

(21) Application number: **20869351.5**

(22) Date of filing: **25.09.2020**

(51) International Patent Classification (IPC):
**E04F 13/08** (2006.01)     **E04C 2/20** (2006.01)
**B32B 3/30** (2006.01)

(52) Cooperative Patent Classification (CPC):
**B32B 3/30; E04C 2/20; E04F 13/08**

(86) International application number:
**PCT/JP2020/036431**

(87) International publication number:
**WO 2021/060530 (01.04.2021 Gazette 2021/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.09.2019   JP 2019176742
27.09.2019   JP 2019176897
24.09.2020   JP 2020159476**

(71) Applicant: **DAI NIPPON PRINTING CO., LTD.
Tokyo 162-8001 (JP)**

(72) Inventors:
• **AKITA, Yasuhiro
Tokyo 162-8001 (JP)**
• **TANAKA, Hideo
Tokyo 162-8001 (JP)**

(74) Representative: **Müller-Boré & Partner
Patentanwälte PartG mbB
Friedenheimer Brücke 21
80639 München (DE)**

(54) **DECORATIVE MATERIAL**

(57)    A decorative material wherein, in a cross section in a direction orthogonal to a direction where a groove extends, the groove has a first slope part extending from one end of the groove to the deepest part of the groove, and a second slope part extending from the other end of the groove to the deepest part of the groove, wherein when an angle formed by a line segment connecting the one and other ends and a line segment connecting the one end and the deepest part is defined as $\theta_1$, and an angle formed by a line segment connecting the one and other ends and a line segment connecting the other end and the deepest part is defined as $\theta_2$, $\theta_1$ is more than $\theta_2$.

Fig. 4

EP 4 036 348 A1

## Description

[Technical Field]

The present disclosure relates to a decorative material.

[Background Art]

Decorative materials are widely used as materials to decorate surfaces of furniture, building materials, walls, etc. Among them, some decorative material that is provided with depressions (grooves) filled up with ink on its surface (which is called "WIPING") shows a predetermined texture.

For example, Patent Literature 1 discloses that in a decorative material made by filling up embossed depressions with ink, the direction where grooves (grooves of parallel lines) in a first depression area extends and the direction where grooves (grooves of parallel lines) in a second depression area extends are changed from each other, and wiping in the filling-up with ink is performed as the direction of the wiping is at any angle with the direction where the grooves extend. This allows the filling volumes of the ink of the first and second depression areas to change from each other, or allows a curved part in the direction where the grooves extend to change the filling volume of the ink when there is such a curved part, so that a particular external appearance is expressed.

[Citation List]

[Patent Literature]

Patent Literature 1: JP H5-131800 A

[Summary of Invention]

[Technical Problem]

An object of the present disclosure is to provide a decorative material that is made by filling up grooves with ink; the decorative material can give a feeling of an external appearance and a tactile sense which are different from conventional ones.

[Solution to Problem]

One aspect of the present disclosure is a decorative material including a groove, and an ink part disposed in the groove, wherein, in a cross section in a direction orthogonal to a direction where the groove extends, the groove has a first slope part extending from one end of the groove to a deepest part of the groove, and a second slope part extending from another end of the groove to the deepest part of the groove, wherein when an angle formed by a line segment connecting the one and other ends and a line segment connecting the one end and the deepest part is defined as $\theta_1$, and an angle formed by a line segment connecting the one and other ends and a line segment connecting the other end and the deepest part is defined as $\theta_2$, the $\theta_1$ is more than the $\theta_2$.

In the cross section, a surface of the ink part may be depressed in a concave form toward a direction where the groove is cut, and an average thickness of the ink part in the first slope part may be more than an average thickness of the ink part in the second slope part.

In the cross section, the ink part may be disposed so as not to partially cover at least one of the first slope part and the second slope part.

In the cross section, at least one of the first slope part and the second slope part may be a stepped part.

The ink part may be disposed so as not to cover at least one of outside corners of the stepped part.

The groove may extend non-linearly or meanderingly in a plan view.

[Advantageous Effects of Invention]

The decorative material according to the present disclosure, which is made by filling up grooves with ink, can give a feeling of an external appearance and a tactile sense which are different from conventional ones.

[Brief Description of Drawings]

[Fig. 1] Fig. 1 is a partially enlarged plan view showing a surface of a decorative material 10, wherein a photograph including a minute pattern surface of the real decorative material 10 is published.
[Fig. 2] Fig. 2 is a partially enlarged perspective view of the decorative material 10 which is schematically shown for explaining the form of a pattern formation layer 12.
[Fig. 3] Fig. 3 is a cross-sectional view of Fig. 2.
[Fig. 4] Fig. 4 is an explanatory cross-sectional view of a form of a groove 13.
[Fig. 5] Fig. 5 is an explanatory cross-sectional view of another form of the groove 13.
[Fig. 6] Fig. 6 is an explanatory cross-sectional view of another form of the groove 13.
[Fig. 7] Fig. 7 is an explanatory cross-sectional view of another form of the groove 13.
[Fig. 8] Fig. 8 is an explanatory cross-sectional view of another form of the grooves 13.
[Fig. 9] Fig. 9 is an explanatory cross-sectional view of another form of the groove 13.
[Fig. 10] Fig. 10 is an explanatory cross-sectional view of another form of the groove 13.
[Fig. 11] Fig. 11 is an explanatory cross-sectional view of another form of an ink part 14.

[Fig. 12] Fig. 12 is an explanatory cross-sectional view of another form of the ink part 14.

[Fig. 13] Fig. 13 is an explanatory cross-sectional view of another form of the ink part 14.

[Fig. 14] Fig. 14 explanatory shows an example of another layer constitution.

[Fig. 15] Fig. 15 explanatory shows an example of another layer constitution.

[Fig. 16] Fig. 16 explanatory shows an example of another layer constitution.

[Fig. 17] Fig. 17 explanatorily shows a scene where depressions and bumps are formed on a die with laser.

[Fig. 18] Fig. 18 explanatorily shows scratching of ink with a doctor blade.

[Description of Embodiments]

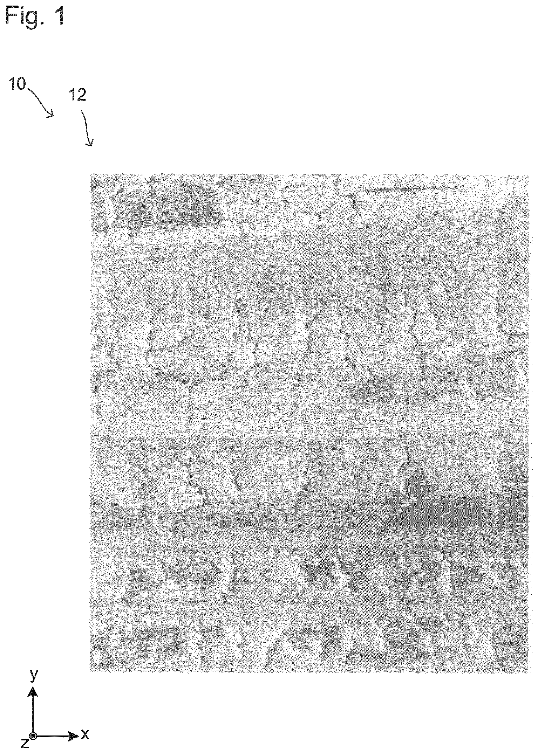

Hereinafter each embodiment will be described as the drawings will be referred to. The present invention is not limited to these embodiments. The following drawings may show changed or exaggerated sizes and proportions of the members for understandability, except Fig. 1, which is a photograph. For visibility, portions which are unnecessary for the description may be omitted in the drawings, and repeatedly appearing signs may be omitted.

Fig. 1 is a partially enlarged plan view of a decorative material 10 according to one embodiment on a pattern formation layer 12 side. If necessary, for convenience, Fig. 1 and the following drawings also show the arrows indicating directions (x, y, z), that is, a coordinate system. Here, the direction xy is an in-plane direction of the decorative material 10, and the direction z is a thickness direction thereof. Thus, Fig. 1 is a (plan) view of the decorative material 10 on the pattern formation layer 12 side particularly in the direction z.

As can be seen from Fig. 1, in the present embodiment, a pattern formation layer 12 is formed so as to give the surface as a whole, an external appearance with depressions like cracks present in the surface which is a style of so-called "burned cedar" of suitably charring the surface of a cedarwood board.

The mode to be expressed in the present disclosure is not limited to a burned cedar style. Examples of the targets include a style of a burnt wooden board of charring the surface of a wooden board other than a cedar, a style of brickwork, and tiling which have joints, a style of a fabric grain having a large number of fibrous depressions, and a style of a leather grain having a large number of wrinkle-like depressions. In these modes of the decorative material, depressions of predetermined lengths extending in a specified direction are expressed by grooves 13 inside which ink parts 14 specified by the present invention are disposed.

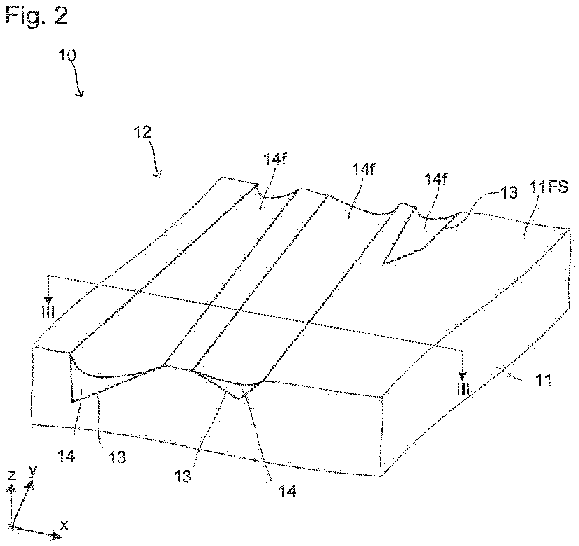

For example, in the case of the mode of a burned cedar style, specified angles $\theta_1$ and $\theta_2$ in the specified cross section, and the grooves 13 inside which the specified ink parts 14 are disposed lead to a concentration gradient (or concentration distribution) of ink in the grooves in the direction orthogonal to the direction where the grooves extend. This makes it possible to reproduce shades, and further a three-dimensional effect which are by cracks or level differences, whereby the external appearance of cracks or level differences on the surface of a surface-charred wooden board such as a burned cedar is well reproduced. At this time, the direction where the grooves 13 extend (the direction Y in Fig. 2) is a direction crossing, and preferably orthogonal to an annual ring pattern (including a cross grain and a straight grain) in a design pattern of a printed layer 16c or a direction where a wood grain of vessel grooves extends (tree height direction).

In the case of the mode of tiling or a brickwork style, the specified angles $\theta_1$ and $\theta_2$ in the specified cross section, and the grooves 13 inside which the specified ink parts 14 are disposed lead to a concentration gradient (or concentration distribution) of ink in the grooves in the direction orthogonal to the direction where the grooves extend. This makes it possible to reproduce shades, and further a three-dimensional effect which are by level differences or depressions of joints of tiling or brickwork, whereby the external appearance of the grooves of the joints is reproduced.

In the case of the mode of a fabric grain style, the specified angles $\theta_1$ and $\theta_2$ in the specified cross section, and the grooves 13 inside which the specified ink parts 14 are disposed lead to a concentration gradient (or concentration distribution) of ink in the grooves in the direction orthogonal to the direction where the grooves extend. This makes it possible to reproduce shades, and further a three-dimensional effect which are by level differences or depressions of knots, tangles, or nodular bumpy portions of intertwined fiber bundles (which are also referred to as "neps"), whereby the external appearance of grooved depressions in the structure of a fibrous assembly (texture) is reproduced.

In the case of the mode of a leather grain style, the specified angles $\theta_1$ and $\theta_2$ in the specified cross section, and the grooves 13 inside which the specified ink parts 14 are disposed lead to a concentration gradient (or concentration distribution) of ink in the grooves in the direction orthogonal to the direction where the grooves extend. This makes it possible to reproduce shades, and further a three-dimensional effect which are by level differences or depressions of wrinkle-like bumps and depressions of leather, whereby the external appearance of wrinkle-like depressions on the surface of the leather is reproduced.

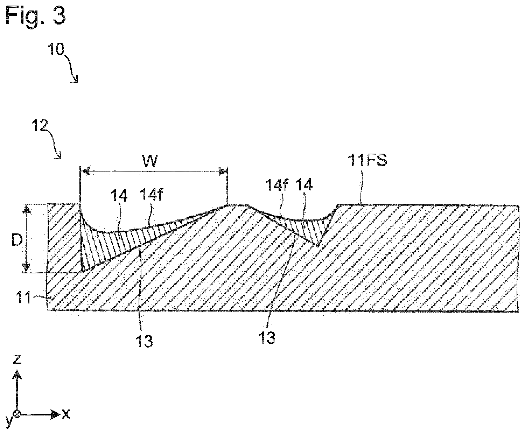

Fig. 2 is a partially enlarged perspective view of the decorative material 10 which is schematically shown for explaining the form of the pattern formation layer 12. Fig. 3 is a cross-sectional view in the thickness direction, which is taken along the line III-III parallel to the direction x of Fig. 2.

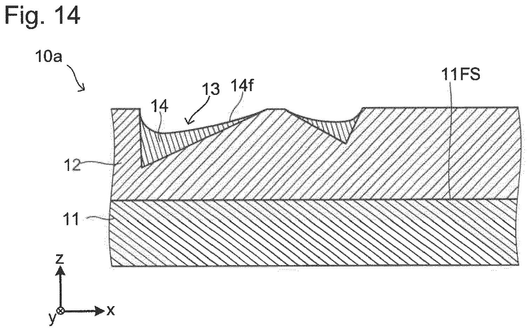

As can be seen from Figs. 1 to 3, in the present embodiment, the decorative material 10 has a substrate 11, and the pattern formation layer 12 provided on one face 11FS (an upper face in Fig. 2, or a face on the positive side in the z-axis direction in the coordinate system) of the substrate 11. Accordingly, in this embodiment, one face of the substrate 11 is formed so as to function as the pattern formation layer 12. In other words, in this embodiment, the substrate 11 itself has a single layer constitution, and is also used as the pattern formation layer 12. As the embodiment shown in Fig. 14 which will be described later, the present invention may have the embodiment of a two-layer constitution of laminating both the substrate 11 and the pattern formation layer 12 as separate independent layers.

Hereinafter the structure of each component will be described in more detail.

The substrate 11 is a sheet member having the functions of holding the pattern formation layer 12, and giving the decorative material 10 strength to retain the shape of the decorative material 10. The substrate 11 may be in any form of a film, a sheet and a board. Generally, a thin member is referred to as a film, a sheet or a board in the order of a relatively less thickness. In the present embodiment, the difference of the substrate according to the thickness is not an essential or important matter. Therefore, even if a film, a sheet or a board is randomly read as any other term thereamong in the present description, the present invention never changes essentially, and claims never change interpretively.

The material of the substrate 11 is not particularly limited as long as the substrate 11 has the same functions as a conventionally known decorative material. Generally, examples of the material of the substrate include polyolefin resins such as polyethylene, polypropylene, olefinic thermoplastic elastomers, and ionomers; acrylic resins such as polymethyl methacrylate, and polybutyl methacrylate; thermoplastic polyester resins such as polyethylene terephthalate, polybutylene terephthalate, polyethylene naphthalate, ethylene glycol-terephthalic acid-isophthalic acid copolymers, terephthalic acid-ethylene glycol-1,4 cyclohexanedimethanol copolymers, and various polyester-based thermoplastic elastomers; thermoplastic urethane resins; vinyl chloride resins such as, polyvinyl chloride, vinyl chloride-vinyl acetate copolymers, and ethylene-vinyl chloride copolymers; thermoplastic resins such as polycarbonate resins, ABS resins (acrylonitrile-butadienestyrene copolymers), and styrene resins; thermosetting resins such as melamine resins, unsaturated polyester resins, epoxy resins, and two-liquid curable urethane resins; and ionizing radiation curable resins that are monomers and prepolymers of radical-polymerizable acrylates, cation-polymerizable epoxies, and the like and are cured by ionizing radiation (such as an ultraviolet ray and an electron beam). When made from a resin, the substrate may be colored by any known colorant. Other than the above resin materials, a paper, a nonwoven fabric, a metal, a wood, a ceramic, a glass, a cement, a stone, or the like may be also used in the form of a sheet, a board, a 3D object, or the like by suitably laminating them onto any of the above resin materials.

When the substrate is formed of any material of "paper" and the following, it is difficult to form grooves therein compared to the case of a resin substrate, and thus the groove shape, processing conditions, etc. are often limited. Therefore, the substrate of any of these materials is preferably formed to have a two-layer (laminated) constitution as in Fig. 14, that is, the constitution of laminating the above described resin layer onto a face of the substrate on the side where grooves are to be formed, that is, on the one face 11FS side, as the pattern formation layer 12.

The thickness of the substrate is not particularly limited. For example, a sheet or film substrate having a thickness of approximately 20 $\mu$m to 1000 $\mu$m is used. For example, a board substrate having a thickness of approximately 1 mm to 20 mm is used.

The pattern formation layer 12 is provided on the one face 11FS of the substrate 11 (when the substrate 11 is also used as the pattern formation layer 12, the vicinity of the one face 11FS of the substrate 11 is the pattern formation layer 12), and provides a surface of the decorative material with a desired pattern. In the present embodiment, the pattern formation layer 12 is formed to be suitable for expressing a pattern of a burned cedar style on the decorative material 10. As can be seen from Figs. 1 to 3, in the present embodiment, the pattern formation layer 12 is provided with a plurality of the grooves 13, and the ink parts 14 disposed inside the grooves 13.

The grooves 13 are grooves of cross-sectional shapes having features described later. These grooves extend in the direction y in the drawings such as Fig. 2. A plurality of the grooves of different widths (sizes in the direction x, which is orthogonal to the extending direction of the grooves), different depths (sizes in the thickness direction of the substrate 11, or in the direction z in the drawings such as Fig. 2), different shapes of the wall surfaces thereof, and the like are provided in the xy plane, to show a predetermined outer shape (outer shape of a burned cedar style in the present embodiment).

The widths of the grooves 13 (W in Fig. 3) are not particularly limited, but are each preferably 200 $\mu$m to 1000 $\mu$m. This makes it difficult to visually recognize them as grooves, and makes it possible to dispose the ink parts 14 having desired shapes in the grooves 13.

The width W in any one of the grooves 13 is not necessarily fixed, but may vary all over the extending direction of the grooves (direction y).

The depths of the grooves 13 (D in Fig. 3) are not particularly limited either, but are each preferably 30 $\mu$m to 80 $\mu$m. This makes it possible to dispose the ink parts 14 of desired forms in the grooves 13 as obtaining the effect of expressing a pattern by shades, particularly reproducing the external appearance of cracks or level differences on the charred surface of a wooden board, typically, a surface of burned cedar.

The depth D in any one of the grooves 13 is not necessarily fixed, but may vary all over the extending direction of the grooves (direction y).

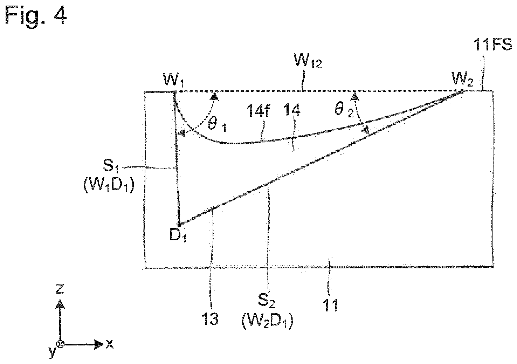

Moreover, the form of the grooves 13 is as follows. Fig. 4 shows an enlarged view focusing on one of the grooves 13 in Fig 3. For visibility of additional lines, hatching is omitted in Fig. 4 and the following.

In this cross section, the groove 13 includes a first slope part $S_1$ extending from one side end part in the width direction $W_1$ to a deepest part Di, and a second slope part $S_2$ extending from the other side end part in the width direction $W_2$ to the deepest part $D_1$.

A line segment $W_{12}$ connecting $W_1$ and $W_2$, a line segment $W_1D_1$ connecting $W_1$ and $D_1$ (same as $S_1$ in this embodiment), and a line segment $W_2D_1$ connecting $W_2$ and $D_1$ (same as $S_2$ in this embodiment) are imagined. When an angle formed by the line segment $W_{12}$ and the line segment $W_1D_1$ is $\theta_1$ and an angle formed by the line segment $W_{12}$ and the line segment $W_2D_1$ is $\theta_2$, $\theta_1$ is larger than $\theta_2$. That is, the first slope part $S_1$ and the second slope part $S_2$ are formed so as not to be symmetrical to but to be different from each other, across the deepest part $D_1$.

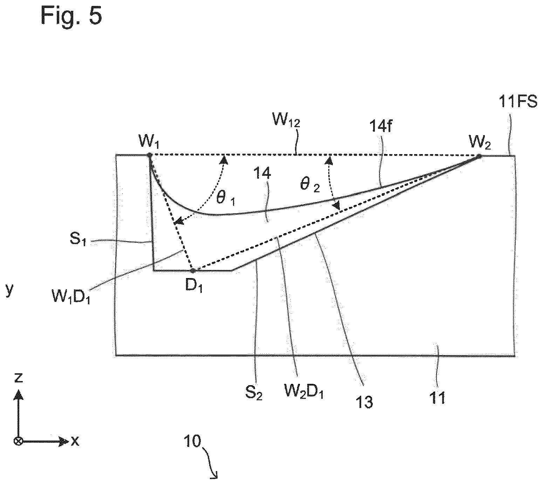

Hereinafter the first slope part $S_1$ and the second slope part $S_2$ according to other embodiments, and ways of obtaining $\theta_1$ and $\theta_2$ using them will be described as Figs. 5 to 7 are referred to. Every drawing is viewed from the same point as Fig. 4.

Fig. 5 shows an embodiment of the deepest part having a predetermined width. In such a case, the line segment $W_1D_1$ and the line segment $W_2D_1$ may be defined assuming that the center of the width of the deepest part is the deepest part $D_1$.

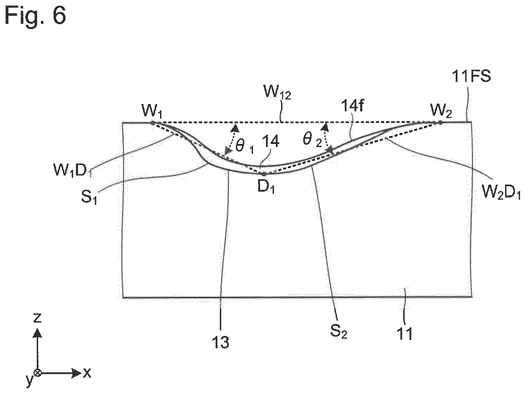

Fig. 6 shows an embodiment of a curved first slope part $S_1$ and a curved second slope part $S_2$. In such a case, the line segment $W_1D_1$ and the line segment $W_2D_1$ may be also defined in the same manner as described above and as Fig. 5. In this case, for obtaining the angles $\theta_1$ and $\theta_2$, the line segment $W_1D_1$ and the line segment $W_2D_1$ are represented by (replaced with) smoothed first slope part $S_1$ and smoothed second slope part $S_2$ that are actually not straight lines.

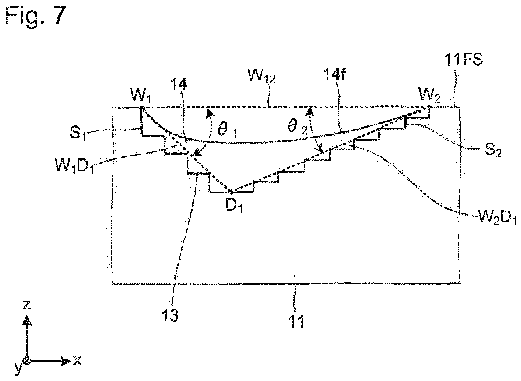

Fig. 7 shows an embodiment of stepped first slope part $S_1$ and stepped second slope part $S_2$ (hereinafter may be simply abbreviated as "slope part $S_1$" and "slope part $S_2$") in a cross section in the direction orthogonal to the extending direction of the groove 13 (hereinafter may be simply referred to as "cross section"). In such a case, the line segment $W_1D_1$ and the line segment $W_2D_1$ may be also defined in the same manner as described above for obtaining the angles $\theta_1$ and $\theta_2$ assuming that the first slope part $S_1$ and the second slope part $S_2$, which are not straight lines, are smoothed and used as representative slope parts (replacements).

In the embodiment of Fig. 7, both the slope part $S_1$ and the slope part $S_2$ are stepped parts as described above. Only one of the slope parts (for example, only the first slope part $S_1$) may be a stepped part, and the other slope part (for example, the second slope part $S_2$) may have a linear or curved cross-sectional shape as shown in Fig. 4 or 6. The embodiment of at least one of the slope part $S_1$ and the slope part $S_2$ having a stepped shape in the cross-sectional shape of the groove 13 is particularly preferable in view of reproducing the external appearance of a minute structure of cracks or level differences on the charred surface of a wooden board, typically, a surface of burned cedar.

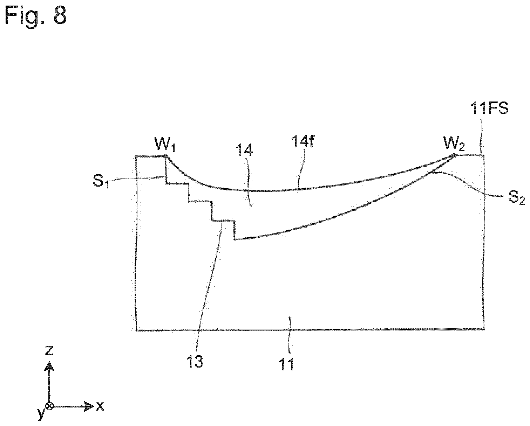

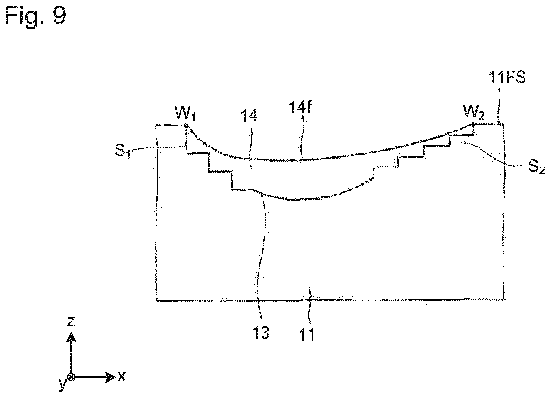

Figs. 8 and 9 show other examples of stepped slopes. In Fig. 8, only the first slope part $S_1$ has a stepped portion, but the second slope part $S_2$ is formed of a gentle continuously curved slope without any stepped portions.

Fig. 9 shows an example of the first slope part $S_1$ and the second slope part $S_2$ each of which partially has a stepped shape and the rest of which does not have a stepped shape.

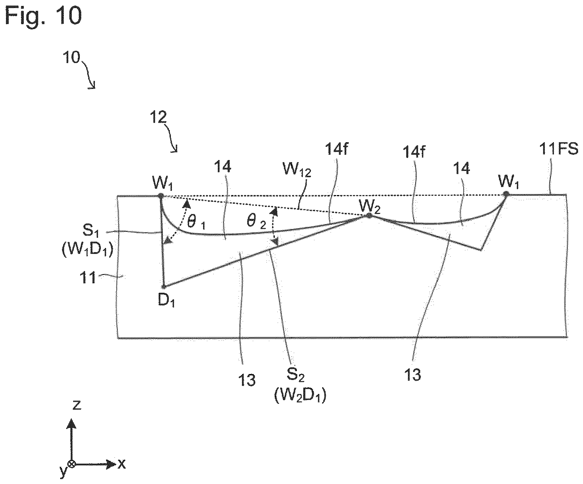

Fig. 10 shows an embodiment of different positions between $W_1$ and $W_2$ in the thickness direction (positions in the direction z) in the groove 13. In this case, the line segment $W_{12}$ connecting $W_1$ and $W_2$, the line segment $W_1D_1$ connecting $W_1$ and $D_1$ (same as $S_1$ in this embodiment), and the line segment $W_2D_1$ connecting $W_2$ and $D_1$ (same as $S_2$ in this embodiment) are also imagined. When an angle formed by the line segment $W_{12}$ and the line segment $W_1D_1$ is $\theta_1$ and an angle formed by the line segment $W_{12}$ and the line segment $W_2D_1$ is $\theta_2$, $\theta_1$ is larger than $\theta_2$. That is, the first slope part $S_1$ and the second slope part $S_2$ are formed so as not to be symmetrical to but to be different from each other, across the deepest part $D_1$.

In this embodiment, the position of $W_1$ is higher than that of $W_2$. The present invention is not limited to this. The position of $W_1$ may be lower than that of $W_2$.

The first slope part $S_1$ and the second slope part $S_2$ may be according to any different embodiments from the above-described embodiments. In one of the grooves 13, the first slope part $S_1$ may be according to a different embodiment from the second slope part $S_2$. In such an embodiment, $\theta_1$ and $\theta_2$ are also defined in the same manner as described above.

Here, the range of $\theta_1$ is not particularly limited, but is preferably 10° to 45°. With $\theta_1$ more than 45°, ink on the bottom of the groove 13 may be scraped off and have gone when the groove 13 are filled with ink so that the ink is disposed therein to form the ink part 14 by wiping described later, which lessens the effect of giving the groove 13 the external appearance of shades, and a three-dimensional effect of the decorative material. $\theta_1$ less than 10° causes the ink amount of the ink part 14 itself to be small, which may lessen the effect of giving the groove 13 the external appearance of shades, and a three-dimensional effect of the decorative material.

The range of $\theta_2$ is not particularly limited either, but is preferably 5° to 30°. $\theta_2$ more than 30° results in a small angular difference between $\theta_1$ (up to 45° in the preferred range) and $\theta_2$, further a small difference between the first slope part $S_1$ and the second slope part

$S_2$ in ink thickness of the ink part 14, and a slight concentration gradient of the ink of the ink part 14 in the groove 13. As a result, the effect of giving the groove 13 the external appearance of shades, and a three-dimensional effect of the decorative material may lessen. $\theta_2$ less than 5° causes the ink amount of the ink part 14 itself to be small, which may lessen the effect of giving the groove 13 the external appearance of shades, and a three-dimensional effect of the decorative material.

The difference $(\theta_1-\theta_2)$ obtained by subtracting $\theta_2$ from $\theta_1$ is preferably 3° to 35°. In particular, $(\theta_1-\theta_2)$ of 7° or more leads to a remarkable effect of giving the groove 13 the external appearance of shades, and a three-dimensional effect of the decorative material. $(\theta_1-\theta_2)$ less than 3° results in a small difference between the first slope part $S_1$ and the second slope part $S_2$ in ink thickness of the ink part 14, and a slight concentration gradient of the ink of the ink part 14 in the groove 13. As a result, the effect of giving the groove 13 the external appearance of shades, and a three-dimensional effect of the decorative material may lessen.

The shape of the first slope part $S_1$, the shape of the second slope part $S_2$, $\theta_1$ and $\theta_2$, and the difference between $\theta_1$ and $\theta_2$ are not necessarily fixed, but may vary all over the extending direction of the grooves 13 (direction y). Thus, the positional relationship between $\theta_1$ and $\theta_2$ may be reversed all over the extending direction. In this case, the relationship between the magnitudes of $\theta_1$ and $\theta_2$ may be also considered in the same way as the above.

In the embodiments shown in Figs. 2 to 16, the direction in which the groove 13 extends in a plan view is not strictly but preferably based on the direction y. The direction orthogonal to this extending direction is preferably set as the direction x. In particular, in the mode of the decorative material 10 aimed at reproducing the external appearance of the design of a burned cedar board, the direction where the groove 13 extends (the direction y in the embodiments shown in Figs. 2 to 16) is a direction crossing, and preferably orthogonal to an annual ring pattern (including a cross grain and a straight grain) in the design pattern of the printed layer 16c or a direction where a wood grain of vessel grooves extends (tree height direction), as described above. Such an extending direction of the groove 13 makes it possible to reproduce the external appearance of the design of cracks or level differences on a carbonized wood portion which are particular to the surface of a burned cedar board.

The foregoing makes it easy to control the thickness distribution of the ink part 14 disposed in the groove 13 according to any embodiment particular to the present disclosure by filling the groove 13 with ink by specified wiping described late.

In this case, the direction in which the groove 13 extends is not necessarily restricted strictly either. It is permitted that the groove 13 inclines to some extent toward the direction x from the direction y, or is a non-linear or curved groove.

Examples of a non-linear or curved groove typically includes the following (1) or (2). In the mode of the decorative material 10 aimed at reproducing the external appearance of the design of a burned cedar board, the direction where the groove 13 extends is a direction preferably crossing, and more preferably orthogonal to an annual ring pattern in the design pattern of the printed layer 16c or a direction where a wood grain of vessel grooves extends even when the groove 13 has a non-linear or curved shape represented by the following (1) or (2), in a plan view.

(1) The groove 13 extends in a specified direction (e.g., the direction y), and has a shape of meandering with respect to the direction (direction x) orthogonal to the extending direction thereof. Examples of the shape of the groove 13 a plan view include the following (1-1) to (1-4):

(1-1): a sine wave extending in the direction y and oscillating in the direction x, which is specifically shown by the following equation:

$$x = a \cdot \sin(b \cdot y + c) + d$$

where a, b, c and d are constants for determining the shape of the groove 13 in a plan view; (1-2): a square wave extending in the direction y and oscillating in the direction x; (1-3): a staircase wave extending in the direction y and oscillating in the direction x; and (1-4): the shape of the groove 13 in a plan view does not always strictly match any of the non-linear or curved shapes (1-1) to (1-3). The shape of the groove 13 in a plan view may be a curve obtained by modulating any one or more of the amplitudes, wavelengths (spatial frequencies), and phases of these sine wave, square wave, staircase wave, etc. as necessary. Such a shape may be suitably deformed or distorted.

(2) The shape of the groove 13 in a plan view is formed of a line meandering in the direction orthogonal to the extending direction of a cliff line, a course of a river, or the like extracted from a map, an aerial photograph, or the like. The shape has a scale or magnification as necessary dimensionally, and may be properly retouched if necessary.

In the direction in which the groove 13 extends (e.g., the direction y), both the end parts of the groove 13 may end without reaching the periphery that forms the external shape of the decorative material 10 (outer edge; four sides if the decorative material is a quadrangle in a plan view); one of the end parts may reach the periphery of the decorative material 10 but the other end part may end without reaching the periphery of the decorative material 10; and both the end parts may reach the periphery of the decorative material 10.

In any pair of adjacent grooves 13, the first slope parts $S_1$ may be next to the second slope parts $S_2$; and the first slope parts $S_1$ may be next to each other, and the second slope parts $S_2$ may be next to each other.

Next, the ink parts 14 will be described. As can be seen from Figs. 2 and 3, the ink parts 14 are portions formed of ink disposed in the grooves 13. The decorative material 10 with such ink can have a different external appearance and tactile sense from that with the grooves 13 only.

The form of the ink parts 14 may be, for example, as follows. In one example, in the cross section as shown in Fig. 4, a surface 14f of each of the ink parts 14 is formed to cover the first and second slope parts $S_1$ and $S_2$, and have the deepest portion at any place between the end part $W_1$ and the end part $W_2$. That is, the depressed surface 14a of the ink part 14 is in a concave form as shown in Fig. 2 toward a direction where the groove is cut, and where an observer sees the decorative material (e.g., the positive direction of the z-axis in Fig. 2).

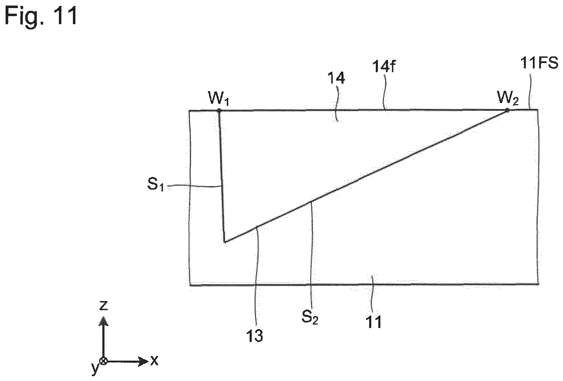

In the cross section of Fig. 11, the ink part 14 covers the first and second slope parts $S_1$ and $S_2$, and keeps approximately the same z position between the end part $W_1$ and the end part $W_2$, to be flat.

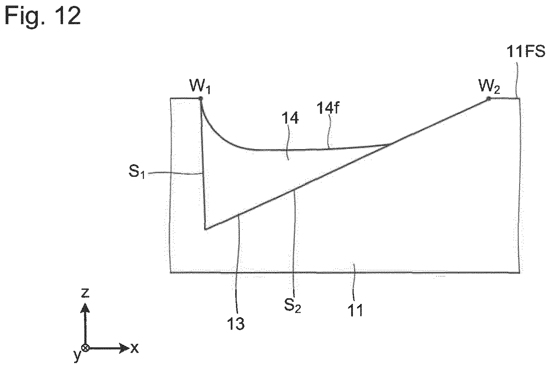

In Fig. 12, the surface 14f of the ink part 14 covers the first slope part $S_1$ and part of the second slope part $S_2$, and is in a concave form as shown in Fig. 12 toward a direction where the groove is cut and where an observer sees the decorative material (e.g., the positive direction of the z-axis in Fig. 12); and a part of the second slope part $S_2$ is exposed.

It may be also considered but is not shown that the ink part 14 covers part of the first slope part $S_1$ and part of the second slope part $S_2$, and both the first slope part $S_1$ and the second slope part $S_2$ are partially exposed.

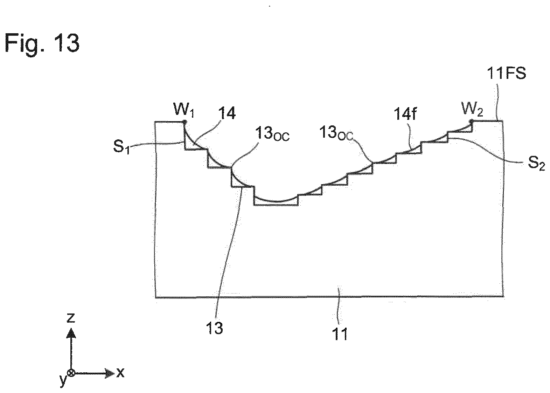

When at least one of the first slope part $S_1$ and the second slope part $S_2$ is stepped parts, for example, as shown in Fig. 13, it may be also considered that no ink part 14 is formed on stepped outside corners 13oc, and the outside corners $13_{OC}$ are exposed.

In the ink part 14 as described above, the thickness of the ink part on the first slope part $S_1$ side can be made to be thicker than that on the second slope part $S_2$ side. More specifically, the average thickness of the ink part on the first slope part $S_1$ is made to be thicker than that on the second slope part $S_2$.

At this time, the difference between the thickness of the ink part on the first slope part $S_1$ side (relatively thick) and that on the second slope part $S_2$ side (relatively thin) (hereinafter may be abbreviated as "ink thickness difference") of 1 $\mu$m or more leads to a good effect of giving the groove 13 the external appearance of shades, and a three-dimensional effect of the decorative material, which is preferable. In view of such an effect, particularly, the ink thickness difference is more preferably at least 3 $\mu$m. The ink thickness difference of 1 $\mu$m or less results in a slight concentration gradient of the ink of the ink part 14 in the groove 13. As a result, the effect of giving the groove 13 the external appearance of shades, and a three-dimensional effect of the decorative material may lessen.

Here, the "average thickness of the ink part on the first slope part $S_1$" is defined as a value obtained by dividing the cross-sectional area of the ink part present on the first slope part $S_1$ by the length of the first slope part $S_1$ in the cross section; and the "average thickness of the ink part on the second slope part $S_2$" is defined as a value obtained by dividing the cross-sectional area of the ink part present on the second slope part $S_2$ by the length of the second slope part $S_2$ in the cross section.

The shape of the ink part 14 is not necessarily fixed, but may vary all over the extending direction of the groove 13. The ink parts 14 disposed in a plurality of the grooves 13 may each have different forms. Such a variation of the shapes of the ink parts 14 expectedly brings about a more particular visual effect. For example, according to the inclination angle of the first slope part and the inclination angle of the second slope part, the mode of filling the grooves 13 with ink varies. More specifically, for example, the difference between the inclination angle ($\theta_1$) of the first slope part and the inclination angle ($\theta_2$) of the second slope part affects the change in the fill rate of the grooves 13 with ink. Thus, an effective gradation is easily formed by changing this difference between the inclination angles. The larger the difference between $W_1$ and $W_2$, and $D_1$ (difference in the height) is, the more the three-dimensional effect can be highlighted, and the richer the shading expression is. Therefore, the above described factors in combination change the form of ink with which the groove is filled with, which allows various expressions.

There is no particular limitation on the material of the ink forming the ink parts. A known ink may be used. An example of the ink is a vehicle containing any one or more of a color pigment, a matte pigment, a dye, and the like. The vehicle may be suitably selected from various thermoplastic resins, thermosetting resins, and ionizing radiation curable resins.

In the decorative material 10 as described above, the change in the form of any one of the ink parts 14 on the first slope part $S_1$ side is different from that on the second slope part $S_2$ side since, because of the forms of the first slope parts $S_1$ and the second slope parts $S_2$ of the grooves 13 and the forms of the ink parts 14 disposed therein in combination, the thickness of any one of the ink parts 14 sequentially changes all over the width direction of the groove 13; the shape on one side in the width direction is asymmetric to that on the other side, across the deepest part; the thickness of any one of the ink parts 14 on the first slope part $S_1$ side tends to be thicker than that on the second slope part $S_2$ side; etc. Therefore, the intensity and direction of the reflected light of the decorative material 10 are different from conventional ones, and thus the decorative material 10 has a visually different effect from conventional one. Likewise, the tactile sense that the decorative material 10 provides is also different from conventional one.

The difference between $W_1$ and $W_2$, and $D_1$ (difference in the height) can produce a three-dimensional effect, and makes a shading expression rich.

The above described decorative material 10 is an example of a single layer constitution of using the substrate 11 also as the pattern formation layer 12, and forming the grooves 13 and the ink layers 14 on the surface of the substrate 11 itself. The layer constitution of the decorative material is not limited to the above, but may be a laminated constitution of laminating, onto the substrate 11, the pattern formation layer 12 as another layer made from a material different from the substrate 11. Any necessary layer may be further laminated suitably, in addition to these substrate 11 and pattern formation layer 12 of a single layer or laminated constitution. Figs. 14 to 16 are explanatory views. Every drawing is viewed from the same point as Fig. 3.

Fig. 14 shows a decorative material 10a of laminating the pattern formation layer 12 prepared as another layer made from a material different from the substrate 11, onto the one surface 11FS (upper face in this drawing) of the substrate 11. This pattern formation layer 12 may be made from the same material as the substrate 11, and the thickness thereof may be different from the substrate 11. In this case, for example, the substrate 11 is formed to be a colored concealing layer, and the pattern formation layer 12 is formed to be a colorless or colored transparent layer, which make it possible to show a particular texture. In view of enhancing the strength of the entire decorative material, an additional substrate (second substrate) may be further laminated on the substrate 11.

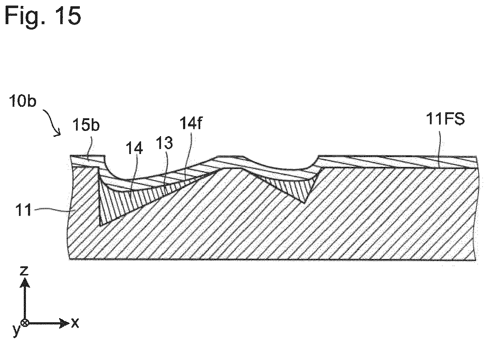

Fig. 15 shows a decorative material 10b of laminating a protective layer 15b made from a transparent resin onto the outermost surface of a layer that functions as the pattern formation layer 12 in the substrate 11, and that is in the vicinity of the upper side in Fig. 15. This makes it possible to improve the weather resistance, scratch resistance, and stain resistance of the decorative material. The resin constituting the protective layer 15b is not particularly limited, but transparent one among the materials listed in the description on the substrate 11 may be used.

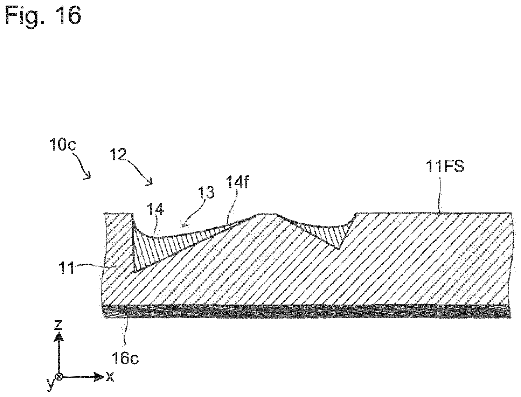

Fig. 16 shows a decorative material 10c of laminating the printed layer 16c onto a face opposite to a layer that functions as the pattern formation layer 12 in the substrate 11, and that is in the vicinity of the upper side in Fig. 16, that is, on the lower side in Fig. 16. In this case, the printed design is shown as a design of the decorative material 10c when the substrate 11 is colorless or colored transparent, which is a particular expression.

The design pattern of the printed layer 16c is selected according to the design which the decorative material 10 is aimed at reproducing the external appearance of.

For example, in the mode of the decorative material 10 aimed at reproducing the external appearance of the design of a wood grain pattern on the surface of a wooden board, a design pattern of a wood grain is adopted as the design pattern of the printed layer 16c. In particular, in the mode of the decorative material aimed at reproducing the external appearance of the design of a burned cedar board, a wood grain pattern approximating the external appearance of a design of a burned cedar board when superimposed on the pattern of the grooves 13 and the ink parts 14 disposed in the grooves 13 to be seen is selected. At this time, it is not always necessary to select a wood grain pattern of a natural burned cedar board. For example, the printed layer 16c may have a pattern of a wood grain other than a burned cedar board as long as anyone seeing the decorative material 10 can feel the external appearance of the design of a burned cedar board when observing three superimposed elements of the grooves 13, the ink parts 14, and the wood grain pattern of the printed layer 16c.

In the mode of the decorative material aimed at reproducing the external appearance of the design of tiling or a brickwork style, a design pattern of tiling or a brickwork style is adopted as the design pattern of the printed layer 16c.

In the mode of the decorative material aimed at reproducing the external appearance of the design of a fabric grain style, a design pattern of a fabric grain style is adopted as the design pattern of the printed layer 16c.

In the mode of the decorative material aimed at reproducing the external appearance of the design of a leather grain style, a design pattern of a leather grain style is adopted as the design pattern of the printed layer 16c.

The decorative material 10 according to the present disclosure includes the structure comprising: the grooves 13 characterized by the angles $\theta_1$ and $\theta_2$, the average thicknesses of the ink parts, etc. as described above; and the ink parts 14 disposed in the grooves.

It is not always necessary that all of the grooves 13 and the ink parts 14 present on the surface of the decorative material 10 have the foregoing characteristics. Proper characteristics may be selected as long as the decorative material 10 according to the present disclosure displays a desired external appearance.

The ratio of the total value $\Sigma L_S$ of the length(s) of the groove(s) 13 that satisfy/satisfies the conditions particular to the present disclosure (such as angles $\theta_1$ and $\theta_2$, and the average thicknesses of the ink parts), to the ground total value $\Sigma L_{total}$ of the lengths of all the grooves 13 measured in the extending direction of the respective grooves 13 present on the surface of the decorative material 10 is defined as $\Sigma L_S/\Sigma L_{total}$. For displaying the external appearance desired in the present disclosure, preferably, $\Sigma L_S/\Sigma L_{total} \geq 3/10$, and more preferably, $\Sigma L_S/\Sigma L_{total} \geq 5/10$. In particular, when the grooves 13 are limited to those corresponding to cracks or portions of level differences of a carbonized wood on the surface of a burnt wood board, typically, a burnt cedar board, that is, when $\Sigma L_{total}$ is a ground total value of the extending lengths of the grooves 13 corresponding to cracks or portions of level differences of a carbonized wood on the surface of a burnt wood board, and $\Sigma L_S$ is a total value of the length(s) of the groove(s) 13 that satisfy/satisfies the conditions particular to the present disclosure in $L_{total}$, preferably, $\Sigma L_S/\Sigma L_{total} \geq 7/10$, and more preferably, $\Sigma L_S/\Sigma L_{total} \geq 8/10$.

In addition to the above, the layer constitution may be made by the second substrate (a third substrate may be further present), the protective layer, and the printed layer suitably in combination.

Examples of the layer constitution of the decorative material include: a layer constitution of laminating the second substrate, the printed layer, and the substrate (pattern formation layer) in this order; a layer constitution of laminating the second substrate, the substrate (pattern formation layer), and the protective layer in this order; and a layer constitution of laminating the second substrate, the printed layer, the substrate (pattern formation layer), and the protective layer in this order.

Next, an example of the method of manufacturing a decorative material will be described using the decorative material 10 as an example. The method of manufacturing a decorative material is not limited to this.

The manufacturing method described as follows includes a step of creating an original image, a step of creating a block copy image, a step of making a board, a step of forming grooves of a pattern formation layer, and a step of filling with ink.

In the step of creating an original image, a pattern (pattern of a burned cedar style) in a plan view which is to be expressed by the grooves in the pattern formation layer 12 is obtained and used as an original image.

In the step of creating a block copy image, a pattern in a plan view which is to be expressed on the surface of the substrate 11 is obtained as the density (lights and shades) of the image, and used as a block copy image. The block copy image is preferably in the form of digital data. Thus, when the original image is not in the form of digital data, digital data that is formed by: aligning pixels in a two-dimensional coordinate plane (x, y); and allocating a density value unique to each pixel, to each corresponding pixel is obtained by using a technique of reading the original image with a scanner, and subjecting the read image to AD conversion. When the original image is designed in the form of digital data first of all using CAD or the like, this digital data may be used.

Then, with a conversion program from the density to bumps and depressions, a pattern of each area as a binary image is created on a two-dimensional assumed plane correspondingly to a gradation image of the pattern and is arranged, so that the block copy image as digital data is obtained.

In the step of making a board, an embossed board (molding die for decorative materials) having a pattern of a shape using the grooves 13 in a plan view, on a surface thereof is made based on the block copy image. Specifically, the step of producing a pattern of bumps and depressions includes the following procedures (1) to (5).

[(1) Step of Creating Lights and Shades Image Data]

Using graphic design drawing software "Photoshop" (trademark) created by Adobe Systems Incorporated, 8-bit TIFF lights and shades image data (having 256 gradations in the grey scale of the image) with a resolution of 2540 dpi is created. This lights and shades image data is also referred to as an image data of a pattern of bumps and depressions.

[(2) Step of Preparing Metal Roll]

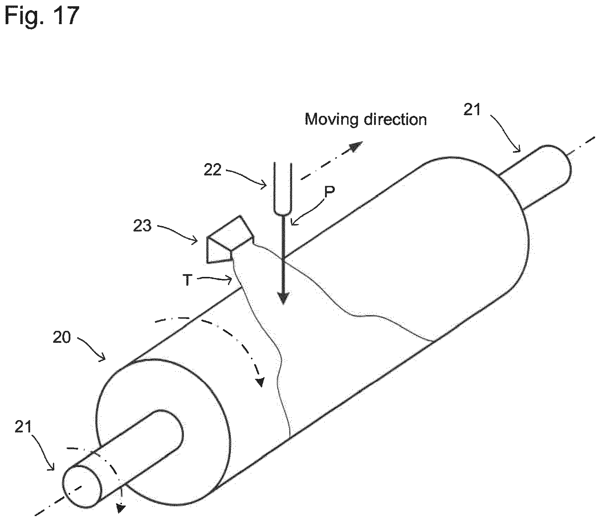

A metal roll 20 for chasing embossed boards as shown in Fig. 17 is prepared. The metal roll 20 is obtained by plating a copper layer on a surface of a hollow iron cylinder that has a rotation driving axis (shaft) 21 at both end portions in the axis direction. The surface of the metal roll 20 is polished by a whetstone to be a rough surface, and then is treated so that specular reflection of laser light for chasing is prevented from deteriorating chasing efficiency.

[(3) Step of Chasing with Laser Light]

The surface of the metal roll 20, which is prepared in the step (2), is chased using a laser light direct chaser based on the image data of the pattern of bumps and depressions, which is created in the step (1), as schematically shown in Fig. 17. This leads to, on the surface of the metal roll 20, formation of a shape of bumps and depressions which has inverse bumps and depressions to, and the same shape as the pattern of bumps and depressions on the surface of the decorative material using the grooves 13 in a plan view (having the relationship of portions of projecting lines on the decorative material corresponding to depressed lines on the surface of the embossed board).

Therefore, a shape that the pattern of bumps and depressions on the embossed board is that of reversing the relationship between bumps and depressions on the pattern of bumps and depressions by the grooves 13 in the decorative material, and may be considered the same as the decorative material.

The metal roll 20 is driven by an electric motor via the rotation driving axis 21, to be rotated as using the rotation driving axis 21 as the central axis. The surface of the metal roll 20 is scanned with laser light P that is emitted from a laser head 22. The irradiation with the laser light is carried out in a state where liquid for chasing T is sprayed from an exhaust port for liquid for chasing 23 onto an area irradiated with the laser light which is on the surface of the metal roll 20, in order to prevent powder converted from the vaporized metal from remaining or adhering to the surface of the metal roll 20.

[(4) Electropolishing Step]

After the liquid for chasing is washed away, electropolishing is carried out to remove the residue of the metal adhered to the surface of the metal roll 20.

[(5) Step of Chrome Plating]

After the step (4), a chromium layer having a thickness of 10 μm is formed on the surface of the metal roll by plating.

The foregoing makes it possible to obtain a board (die for molding decorative materials. The embossed board in the present embodiment) including a surface profile of bumps and depressions that is formed of inverse bumps and depressions to the pattern of bumps and depressions using the grooves 13 which is formed on the surface of the pattern formation layer 12.

Next, in the step of forming grooves of a pattern formation layer, the grooves 13 are obtained by embossing the substrate 11 using the made board (embossed board). The embossing may be carried out by any suitable known method without any particular limitations. Examples of typical embossing methods include the following.

A resin sheet made from a thermoplastic resin such as polyolefin resins is used as the substrate. This substrate is heated and softened. The embossed board is pressed onto a surface of this substrate to shape the pattern of bumps and depressions on the surface of the embossed board, on the surface of the resin sheet. Then, the resin sheet is cooled and cured, and then the pattern of bumps and depressions thereon is fixed. Thereafter the resin sheet, on which the pattern of bumps and depressions is formed, is removed from the embossed board.

Here, a variety of embossing methods such as the following (A) to (E) will be further described.

    (A) A resin sheet that is to be the substrate is heated and softened. The embossed board is pressed onto, and embosses this resin sheet.

    (B) A resin sheet (substrate) that is to be a surface sheet by heat and pressure when the embossed board is pressed, and a resin sheet (second substrate) that is to be a base sheet are heat-sealed, so that embossing is performed by the doubling embossing method of carrying out embossing and laminating at the same time.

    (C) A resin sheet (substrate) that is to be a surface sheet is subjected to melt extrusion via a T-die, and made to be in contact with the top of a cylindrical embossed board that also functions as a cooling roller, and then is embossed at the same time when the surface sheet is formed. At this time, a resin sheet (second substrate) that is to be a base sheet and is inserted on the back side of the surface sheet is further heat-sealed, and doubling embossing is performed at the same time as the sheet formation.

    (D) As disclosed in, for example, JP S57-87318 A and JP H7-32476 A, a surface of a cylindrical embossed board is coated with an uncured liquid of an ionizing radiation curable resin. Further, the top of this uncured liquid is irradiated with ionizing radiation as a base sheet formed of a resin sheet or the like is laminated thereto, so that the uncured liquid is cured to become a cured material. At this time, this cured material is adhered to the base sheet, and thereafter removed from the embossed board, so that a substrate that is formed of the base sheet and the cured material on the base sheet is formed, which results in the embossed substrate.

    (E) Impregnated paper that is obtained by impregnating an uncured material of a thermosetting resin such as melamine resins with paper such as titanium paper is placed on a backing material such as core paper and plywood. A plurality of these layers are subjected to heat press molding to be unitedly laminated, so that a thermosetting resin decorative material is made. At this time, the embossed board is inserted on the surface side of the impregnated paper, which results in the surface embossed and heat-pressed at once when the thermosetting resin is impregnated and cured to form the decorative material.

Any thermoplastic resin is typically used as the materials of the substrates used in the embossing methods (A) to (C). An ionizing radiation curable resin is typically used as the material of the substrate used in the embossing method (D). A thermosetting resin is typically used as the material of the substrate used in the embossing method (E).

In the step of filling with ink, the grooves 13 formed on the surface of the substrate 11 are filled with ink, and the ink is disposed in the groove 13 in a desired thickness distribution to form the ink parts 14. This is performed by: supplying (uncured) an ink material to be the ink parts 14, to the face of the substrate 11 where the grooves 13 are formed, by a coating method such as curtain flow coating and roll coating; and scratching this face with a doctor blade, a squeegee, a sponge roller, or the like to remove (wipe) excess ink that is outside the grooves 13. Such a method itself of filling with and disposing ink in the grooves is a method known as so-called "wiping".

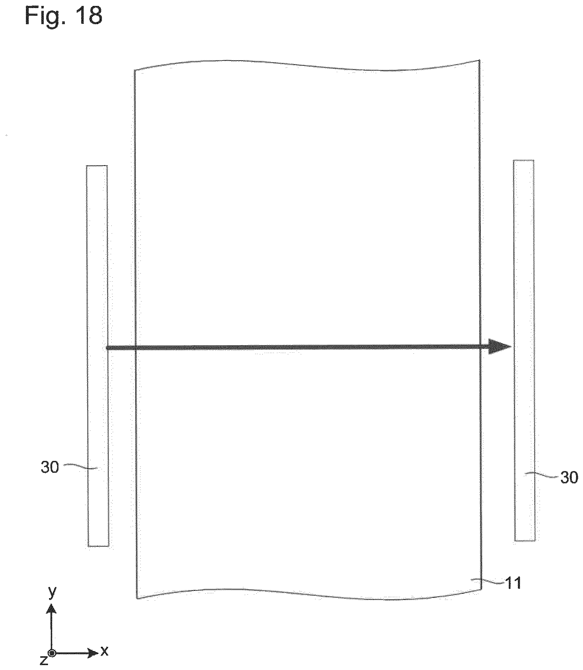

The foregoing makes it possible to remove excess ink, and push ink into the grooves 13. In this embodiment, as shown by the straight arrow in Fig. 18, the method is carried out by moving a doctor blade 30 in the direction (direction x) orthogonal to the direction (direction y) where the grooves 13 extend. That is, the doctor blade 30 is moved toward the direction x, which is orthogonal to the direction y, where the grooves 13 extend. This makes it possible to easily form the shapes of the ink parts 14 that are novel and particular to the present disclosure as described above, that is, the following thickness distribution of the ink parts in the grooves: the thickness of any one of the ink parts of the grooves 13 on the

19

EP 4 036 348 A1

20

first slope part $S_1$ side is more than that on the second slope part $S_2$ side.

The ink is cured by a suitable method, so that the decorative material 10 is obtained.

The use of the above described decorative material is not particularly limited, but examples thereof include interior materials for buildings such as walls, floors, and ceilings; exterior materials for buildings such as exterior walls, roofs, gates, walls, and fences; fittings such as doors, window frames, and door frames; facing materials for millwork such as crown moldings, skirting boards, and handrails; facing materials for housings of home appliances such as TV sets and refrigerators, and of office equipment such as copying machines; facing materials for furniture such as chests of drawers; facing materials for containers such as boxes and resin bottles; interior and exterior materials for vehicles etc.; and interior and exterior materials for vessels.

[Reference Signs List]

10    decorative material
11    substrate
12    pattern formation layer
13    groove
14    ink part

**Claims**

1. A decorative material including a groove, and an ink part disposed in the groove, wherein, in a cross section in a direction orthogonal to a direction where the groove extends,

   the groove has a first slope part extending from one end of the groove to a deepest part of the groove, and a second slope part extending from another end of the groove to the deepest part of the groove, wherein
   when an angle formed by a line segment connecting the one and other ends and a line segment connecting the one end and the deepest part is defined as $\theta_1$, and an angle formed by a line segment connecting the one and other ends and a line segment connecting the other end and the deepest part is defined as $\theta_2$, the $\theta_1$ is more than the $\theta_2$.

2. The decorative material according to claim 1, wherein, in the cross section,

   a surface of the ink part is depressed in a concave form toward a direction where the groove is cut, and
   an average thickness of the ink part in the first slope part is more than an average thickness of the ink part in the second slope part.

3. The decorative material according to claim 1 or 2, wherein
   in the cross section, the ink part is disposed so as not to partially cover at least one of the first slope part and the second slope part.

4. The decorative material according to any one of claims 1 to 3, wherein, in the cross section, at least one of the first slope part and the second slope part is a stepped part.

5. The decorative material according to claim 4, wherein the ink part is disposed so as not to cover at least one of outside corners of the stepped part.

6. The decorative material according to any one of claims 1 to 5, wherein the groove extends non-linearly in a plan view.

7. The decorative material according to any one of claims 1 to 5, wherein the groove extends meanderingly in a plan view.

11

Fig. 1

Fig. 2

Fig. 3

Fig. 4

## Fig. 5

Fig. 6

Fig. 7

Fig. 8

Fig. 9

Fig. 10

Fig. 11

Fig. 12

## Fig. 13

Fig. 14

Fig. 15

Fig. 16

Fig. 17

Fig. 18

30

30

11

y

z — x

## INTERNATIONAL SEARCH REPORT

International application No.

PCT/JP2020/036431

A. CLASSIFICATION OF SUBJECT MATTER
E04F 13/08(2006.01)i; E04C 2/20(2006.01)i; B32B 3/30(2006.01)i
FI: E04C2/20 B; B32B3/30; E04F13/08 E

According to International Patent Classification (IPC) or to both national classification and IPC

B. FIELDS SEARCHED

Minimum documentation searched (classification system followed by classification symbols)
E04F13/08; E04C2/20; B32B3/30

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2004-60241 A (NICHIHA CO., LTD.) 26 February 2004 (2004-02-26) paragraphs [0036]-[0045], [0067], fig. 3 | 1 |
| Y | paragraphs [0036]-[0045], [0067], fig. 3 | 6-7 |
| A | entire text, all drawings | 2-5 |
| Y | JP 11-182031 A (HIROSHIMA KASEI, LTD.) 06 July 1999 (1999-07-06) paragraphs [0023]-[0025], fig. 1 | 6-7 |
| A | JP 3-254943 A (DAINIPPON PRINTING CO., LTD.) 13 November 1991 (1991-11-13) entire text, all drawings | 1-7 |
| A | JP 7-140631 A (DAINIPPON PRINTING CO., LTD.) 02 June 1995 (1995-06-02) entire text, all drawings | 1-7 |
| A | JP 2019-43803 A (DAIKEN CORPORATION) 22 March 2019 (2019-03-22) entire text, all drawings | 1-7 |

☐ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08 December 2020 (08.12.2020) | 15 December 2020 (15.12.2020) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

INTERNATIONAL SEARCH REPORT

Information on patent family members

International application No.

PCT/JP2020/036431

| Patent Documents referred in the Report | Publication Date | Patent Family | Publication Date |
|---|---|---|---|
| JP 2004-60241 A | 26 Feb. 2004 | (Family: none) | |
| JP 11-182031 A | 06 Jul. 1999 | (Family: none) | |
| JP 3-254943 A | 13 Nov. 1991 | (Family: none) | |
| JP 7-140631 A | 02 Jun. 1995 | (Family: none) | |
| JP 2019-43803 A | 22 Mar. 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H5131800 A
- JP S5787318 A
- JP H732476 A